# EUROPÄISCHE PATENTSCHRIFT

(11) **EP 1 651 858 B1**
(45) Veröffentlichungstag und Bekanntmachung des Hinweises auf die Patenterteilung: **23.05.2007**
(21) Anmeldenummer: 04738654.5
(22) Anmeldetag: 09.06.2004
(51) Int. Cl.: F02M 47/02, F02M 45/08

(54) **KRAFTSTOFF-EINSPRITZVORRICHTUNG FÜR EINE BRENNKRAFTMASCHINE**
FUEL INJECTION DEVICE FOR A COMBUSTION ENGINE
DISPOSITIF D'INJECTION DE CARBURANT POUR MOTEUR A COMBUSTION INTERNE

(30) Priorität: 26.07.2003 DE 10334209
(43) Veröffentlichungstag der Anmeldung: 03.05.2006
(73) Patentinhaber: ROBERT BOSCH GMBH, 70442 Stuttgart (DE)
(72) Erfinder: BOEHLAND, Peter, 71672 Marbach (DE); NENTWIG, Godehard, 70597 Stuttgart (DE); BAUER, Michael, 70839 Gerlingen (DE)
(86) Internationale Anmeldenummer: PCT/DE2004/001202
(87) Internationale Veröffentlichungsnummer: WO 2005/014997

(56) Entgegenhaltungen:
- EP-A- 1 344 929
- WO-A-02/18775
- WO-A-20/04033890
- DE-A- 10 056 165
- DE-A- 10 122 241
- US-A1- 2003 106 947

## Beschreibung

### Stand der Technik

Die Erfindung betrifft eine Kraftstoff-Einspritzvorrichtung nach dem Oberbegriff des Anspruchs 1.

Eine solche Kraftstoff-Einspritzvorrichtung ist aus der DE 101 22 241 A1 bekannt. Sie kommt bei Brennkraftmaschinen mit Kraftstoff-Direkteinspritzung zum Einsatz. Bei derartigen Brennkraftmaschinen ist jedem Brennraum eine eigene Kraftstoff-Einspritzvorrichtung zugeordnet, die den Kraftstoff unter hohem Druck in den jeweiligen Brennraum einspritzt.

Insbesondere bei Dieselmotoren ist es zur Senkung der Emissionen und zur Steigerung des Wirkungsgrads der Brennkraftmaschine wünschenswert, den Kraftstoff möglichst fein zerstäubt in den Brennraum der Brennkraftmaschine einzuspritzen. Um dieses Ziel zu erreichen, kann beispielsweise der Einspritzdruck, mit dem der Kraftstoff der Kraftstoff-Einspritzvorrichtung zugeführt wird, vergleichsweise hoch sein.

Wenn vergleichsweise viele Austrittskanäle vorhanden sind, müsste der Kraftstoffdruck deutlich verringert werden, um auch kleine Mengen einspritzen zu können, ohne dass die entsprechenden Einspritzzeiten zu kurz werden. Da dies jedoch eine schlechtere Zerstäubung des Kraftstoffs zur Folge hätte, werden stattdessen Kraftstoff-Einspritzvorrichtungen vorgeschlagen, welche mehrere Ventilelemente aufweisen, denen jeweils bestimmte Austrittskanäle zugeordnet sind. Soll nur wenig Kraftstoff eingespritzt werden, öffnet nur ein Ventilelement, so dass der Kraftstoff nur durch eine geringe Anzahl von Austrittskanälen in den Brennraum eingespritzt wird. Auch bei hohem Druck können so kleine Mengen mit guter Zerstäubung in den Brennraum eingebracht werden.

Bei der bekannten Vorrichtung sind beide Ventilelemente hubgesteuert. Dabei ist jedem Ventilelement eine in Schließrichtung wirkende hydraulische Steuerfläche und eine in Öffnungsrichtung wirkende hydraulische Druckfläche zugeordnet. Soll das Ventilelement öffnen, wird der an der Steuerfläche anliegende Druck gesenkt.

In der WO 02/18775 A1 wird eine Kraftstoff-Einspritzvorrichtung beschrieben, bei der zwei Ventilelemente jeweils über einen Steuerraum angesteuert werden, wobei die beiden Steuerräume zueinander hydraulisch parallel geschaltet sind. Ähnliches gilt für die in der DE 100 56 168 A1 beschriebene Vorrichtung.

Die vorliegende Erfindung hat die Aufgabe, eine Kraftstoff-Einspritzvorrichtung der eingangs genannten Art so weiter zu bilden, dass sie in allen Lastbereichen der Brennkraftmaschine den Kraftstoff optimal einspritzt.

Die Aufgabe wird durch eine Kraftstoff-Einspritzvorrichtung mit den Merkmalen des Anspruchs 1 gelöst. Weiterbildungen der Erfindung sind in Unteransprüchen genannt.

Vorteile der Erfindung

Dadurch, dass die Fluidverbindung unterbrochen werden kann, kann das eine Ventilelement hydraulisch vom anderen Ventilelement entkoppelt werden. Dies gestattet es vor allem zu verhindern, dass jenes Ventilelement, welches als zweites öffnet und an sich schon bei einer geringen Druckerhöhung wieder schließen würde, zu früh schließt und es am Ende einer Einspritzung zu einem unerwünscht flachen Einspritzdruckverlauf kommt. Dies wäre der Genauigkeit bei der Zumessung des Kraftstoffs in den Brennraum abträglich und würde insbesondere bei Volllast den Eintrag der benötigten Kraftstoffmenge erschweren.

In einer ersten Weiterbildung wird vorgeschlagen, dass die Ventileinrichtung einen zapfenartigen, vorzugsweise konischen Ventilkörper am inneren Ventilelement umfasst.

Dabei ist es besonders vorteilhaft, wenn die hydraulische Steuerfläche des inneren Ventilelements insgesamt konisch ist und so den Ventilkörper der Ventileinrichtung bildet. Dies vereinfacht die Herstellung.

Wenn der Endabschnitt des äußeren Ventilelements ein separates zylindrisches Teil umfasst, in dem eine zentrische, stufenförmige Durchgangsbohrung vorhanden ist, wird die Fertigung vereinfacht.

Alternativ ist auch denkbar, dass die Fluidverbindung in etwa radial verläuft und die Ventileinrichtung eine Ventilkante an einem Ventilelement im Sinne eines Schieberventils umfasst, welche in einer geöffneten Endstellung dieses Ventilelements die Mündung der Fluidverbindung wenigstens in etwa verdeckt. Dies ermöglicht geringere Fertigungstoleranzen.

Vorgeschlagen wird auch, dass die Fluidverbindung eine Strömungsdrossel umfasst. In diesem Fall kann die hydraulische Kopplung des Druckverlaufs im einen Steuerraum mit dem Druckverlauf im anderen Steuerraum sehr genau eingestellt werden.

Indem ein Ventilelement einen Mitnehmerabschnitt aufweist, welcher am anderen Ventilelement mindestens zu Beginn des Schließvorganges anliegt, wird in bestimmten Betriebssituationen ein gemeinsames Schließen sichergestellt. Dies fördert die Ausbildung eines emissionsgünstigen Einspritzverhaltens.

Besonders vorteilhaft ist es, wenn die Steuerflächen so dimensioniert sind, dass dann, wenn der Druck in dem dem äußeren Ventilelement zugeordneten Steuerraum wieder erhöht wird, bevor das innere Ventilelement in seiner geöffneten Endstellung angelangt ist, in der es die Fluidverbindung verschließt, das innere Ventilelement vor dem äußeren Ventilelement schließt, und wenn die bei geschlossener Ventileinrichtung und maximalem Druck in dem dem äußeren Ventilelement zugeordneten Steuerraum auf die wirksame Steuerfläche des inneren Ventilelements wirkende hydraulische Kraft ausreicht, um das innere Ventilelement in Schließrichtung zu bewegen, sobald das äußere Ventilelement in seine Schließstellung kommt. In diesem Fall kann bei Teillast ein sukzessives Öffnen und Schließen der beiden Ventilelement realisiert werden, wohingegen bei Volllast ein sukzessives Öffnen, jedoch ein nahezu gleichzeitiges Schließen der Ventilelement möglich ist.

### Zeichnungen

Nachfolgend werden besonders bevorzugte Ausführungsbeispiele der vorliegenden Erfindung unter Bezugnahme auf die beiliegende Zeichnung näher erläutert. In der Zeichnung zeigen:
- Figur 1: eine schematische Darstellung eines Kraftstoffsystems einer Brennkraftmaschine mit mehreren Kraftstoff-Einspritzvorrichtungen;
- Figur 2: einen Teilschnitt durch eine der Kraftstoff-Einspritzvorrichtungen von Figur 1;
- Figur 3: ein Detail III der Kraftstoff-Einspritzvorrichtung von Figur 2;
- Figur 4: ein Detail IV der Kraftstoff-Einspritzvorrichtung von Figur 2 in einem ersten Betriebszustand;
- Figur 5: eine Darstellung ähnlich Figur 4, in einem zweiten Betriebszustand;
- Figur 6: ein Diagramm, in dem die Hübe der beiden Ventilelemente und die Schaltstellung eines Schaltventils bei Teillast der Brennkraftmaschine über der Zeit aufgetragen sind;
- Figur 7: ein Diagramm ähnlich Figur 6 bei Volllast;
- Figur 8: ein Diagramm, in dem eine abgegebene Kraftstoffmenge über einer Ansteuerzeit der in den Figuren 1 bis 5 gezeigten Kraftstoff-Einspritzvorrichtung aufgetragen ist;
- Figur 9: eine Darstellung ähnlich Figur 3 einer abgewandelten Ausführungsform einer Kraftstoff-Einspritzvorrichtung; und
- Figur 10: eine Darstellung ähnlich Figur 3 einer nochmals abgewandelten Ausführungsform einer Kraftstoff-Einspritzvorrichtung.

### Beschreibung der Ausführungsbeispiele

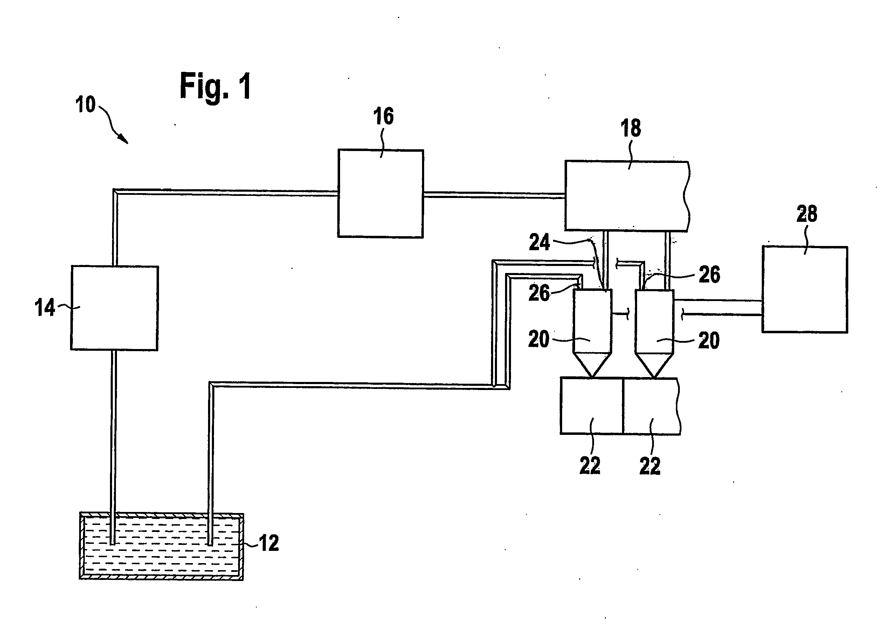

In Figur 1 trägt ein Kraftstoffsystem insgesamt das Bezugszeichen 10. Es gehört zu einer Brennkraftmaschine, welche im Detail nicht dargestellt ist. Das Kraftstoffsystem 10 umfasst einen Kraftstoffbehälter 12, aus dem eine elektrische Kraftstoffpumpe 14 den Kraftstoff zu einer Hochdruck-Kraftstoffpumpe 16 fördert. Diese verdichtet den Kraftstoff auf einen sehr hohen Druck und fördert ihn weiter zu einer Kraftstoff-Sammelleitung 18 . ("Rail"). An die Kraftstoff-Sammelleitung 18 sind mehrere Kraftstoff-Einspritzvorrichtungen 20 angeschlossen. Diese spritzen den Kraftstoff direkt in einen ihnen jeweils zugeordneten Brennraum 22 ein. Die Verbindung der Kraftstoff-Einspritzvorrichtungen 20 mit der Kraftstoff-Sammelleitung 18 erfolgt jeweils über einen Hochdruckanschluss 24. Über einen Niederdruckanschluss 26 sind die Kraftstoff-Einspritzvorrichtungen 20 mit dem Kraftstoffbehälter 12 verbunden. Der Betrieb der Kraftstoff-Einspritzvorrichtungen 20 wird von einem Steuer- und Regelgerät 28 gesteuert beziehungsweise geregelt.

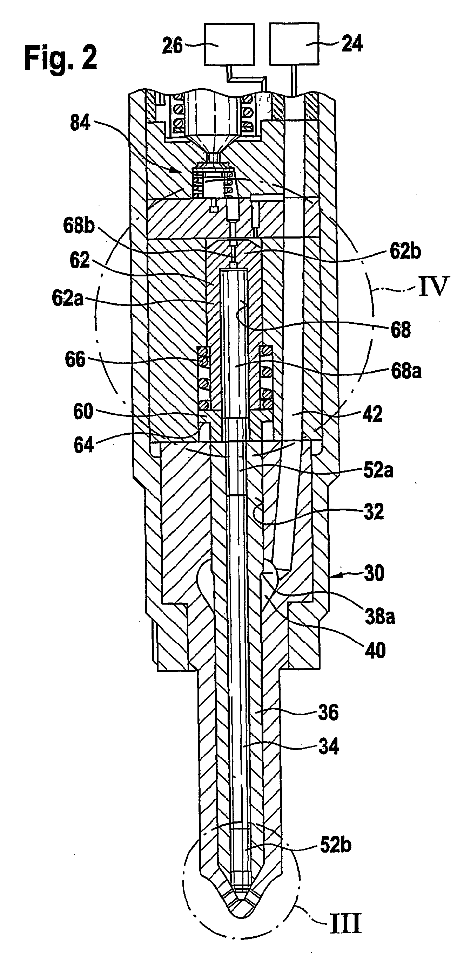

Die genaue Ausgestaltung der Kraftstoff-Einspritzvorrichtungen 20 wird nun insbesondere unter Bezugnahme auf die Figuren 2 bis 5 erläutert:

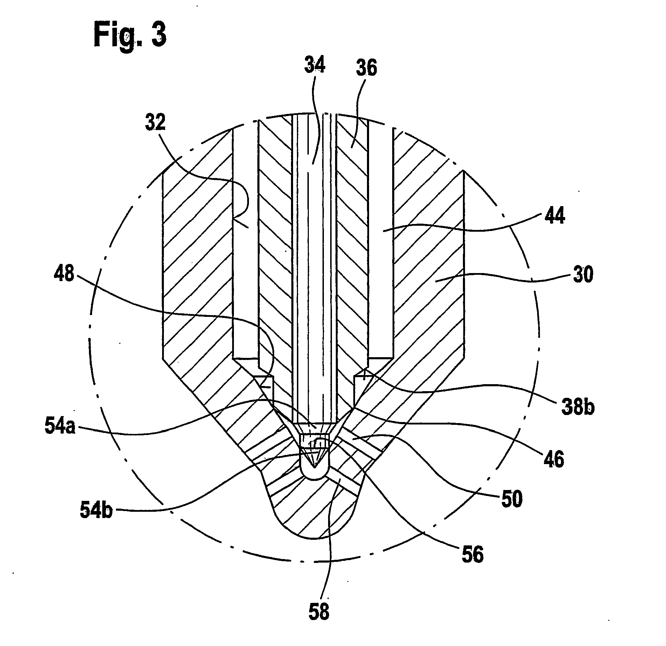

In einem mehrteiligen Gehäuse 30 ist eine in Längsrichtung verlaufende Ausnehmung 32 vorhanden. In dieser sind zwei zueinander koaxiale Ventilelemente 34 und 36 angeordnet. Das äußere Ventilelement 36 weist in etwa in Höhe seiner halben Längserstreckung eine durch einen umlaufenden konischen Absatz gebildete und in Öffnungsrichtung wirkende hydraulische Druckfläche 38a auf. Die Ausnehmung 32 weist in diesem Bereich einen durch eine umlaufende Erweiterung gebildeten Druckraum 40 auf. Dieser ist über einen Hochdruckkanal 42 mit dem Hochdruckanschluss 24 verbunden. Im Bereich seines in Figur 2 unteren Endes ist am äußeren Ventilelement 36 eine zweite, durch einen konischen Absatz gebildete und in Öffnungsrichtung wirkende Druckfläche 38b vorhanden (vergleiche Figur 3).

Vom Druckraum 40 zur Druckfläche 38b erstreckt sich ein Ringraum 44. Nochmals stromabwärts von der Druckfläche 38b ist am äußeren Ventilelement 36 eine Dichtkante 46 ausgebildet, die bei geschlossenem Ventilelement 36 an einer konischen Gehäusefläche 48 der Ausnehmung 32 anliegt. Nochmals stromabwärts von der Dichtkante 46 wird das Gehäuse 30 von mehreren, in Umfangsrichtung verteilt angeordneten Kraftstoff-Austrittskanälen 50 durchsetzt.

Das innere Ventilelement 34 weist zwei Führungsabschnitte 52a und 52b auf, mit denen es im äußeren Ventilelement 36 geführt ist. An dem in den Figuren 2 und 3 unteren Ende des inneren Ventilelements 34 ist eine erste durch einen konischen Absatz gebildete und in Öffnungsrichtung wirkende Druckfläche 54a ausgebildet. Stromabwärts von dieser ist eine Dichtkante 56 vorhanden, die bei geschlossenem innerem Ventilelement 34 ebenfalls an der konischen Gehäusefläche 48 anliegt. Die Spitze des inneren Ventilelements 34 bildet eine weitere in Öffnungsrichtung des Ventilelements 34 wirkende Druckfläche 54b. Dem inneren Ventilelement 34 sind eigene Kraftstoff-Austrittskanäle 58 zugeordnet, die ebenfalls über den Umfang des Gehäuses 30 verteilt angeordnet sind.

Das äußere Ventilelement 36 umfasst einen separaten Zwischenabschnitt 60 und eine separate, hülsenförmige Endkappe 62. Der Zwischenabschnitt 60 weist einen sich radial erstreckenden Kragen 64 auf, an dem sich eine Druckfeder 66 abstützt. Durch die Druckfeder 66 wird das äußere Ventilelement 36 in Schließrichtung beaufschlagt. Die Endkappe 62 ist als zylindrisches Teil mit einer Seitenwand 62a und einem Deckel 62b ausgebildet, in dem eine zentrische, stufenförmige Durchgangsbohrung 68 ausgebildet ist. In einem in den Figuren 2, 4 und 5 unteren Bereich 68a der Durchgangsbohrung, der einen vergleichsweise großen Durchmesser aufweist, ist ein Endkolben 70 des inneren Ventilelements 34 gleitend geführt.

Ein Bereich 68b der Durchgangsbohrung 68 hat einen vergleichsweise kleinen Durchmesser und verbindet einen zwischen dem Endkolben 70 des inneren Ventilelements 34 und der Endkappe 62 des äußeren Ventilelements 36 ausgebildeten hydraulischen Steuerraum 72 mit einem zwischen der Endkappe 62 und dem Gehäuse 30 ausgebildeten hydraulischen Steuerraum 74, und wird daher nachfolgend als Verbindungskanal 68b bezeichnet. Der Steuerraum 74 ist über einen Hochdruckkanal 76 und eine in diesem angeordnete Zulaufdrossel 78 mit dem Hochdruckkanal 42 ständig verbunden.

Der Steuerraum 72 wird seitens des Endkolbens 70 von einer hydraulischen Steuerfläche 73 begrenzt, die einen äußeren ebenen Randabschnitt 73a und einen mittigen, konischen und senkrecht abragenden Zapfenabschnitt 73b aufweist. Analog hierzu wird der Steuerraum 74 von Seiten der Endkappe 62 des äußeren Ventilelements 36 von einer hydraulischen Steuerfläche 75 mit einem ebenen Zentralabschnitt 75a und einem abgeschrägten Randabschnitt 75b begrenzt. Die Mündung (ohne Bezugszeichen) des Verbindungskanals 68b in den inneren Steuerraum 72 bildet einen Ventilsitz für den Zapfenabschnitt 73b. Auf diese Weise wird eine Ventileinrichtung 77 gebildet, welche den Verbindungskanal 68b sperren kann. Hierauf wird weiter unten noch stärker im Detail eingegangen werden.

Eine Abströmdrossel 80 und ein Abströmkanal 82 führen vom Steuerraum 74 zu einem elektromagnetischen Schaltventil 84. Dessen zweiter Anschluss führt zum Niederdruckanschluss 26. Über das Schaltventil 84 kann der Steuerraum 74 mit dem Niederdruckanschluss 26 verbunden oder von diesem getrennt werden. Die Mündung der Abströmdrossel 80 in den Steuerraum 74 liegt koaxial zum Verbindungskanal 68b in der Endkappe 62 des äußeren Ventilelements 36. Die Mündung des Hochdruckkanals 76 dagegen liegt im Bereich des äußeren Rands des Steuerraums 74.

Die in den Figuren 2 bis 5 gezeigte Kraftstoff-Einspritzvorrichtung 20 arbeitet folgendermaßen:

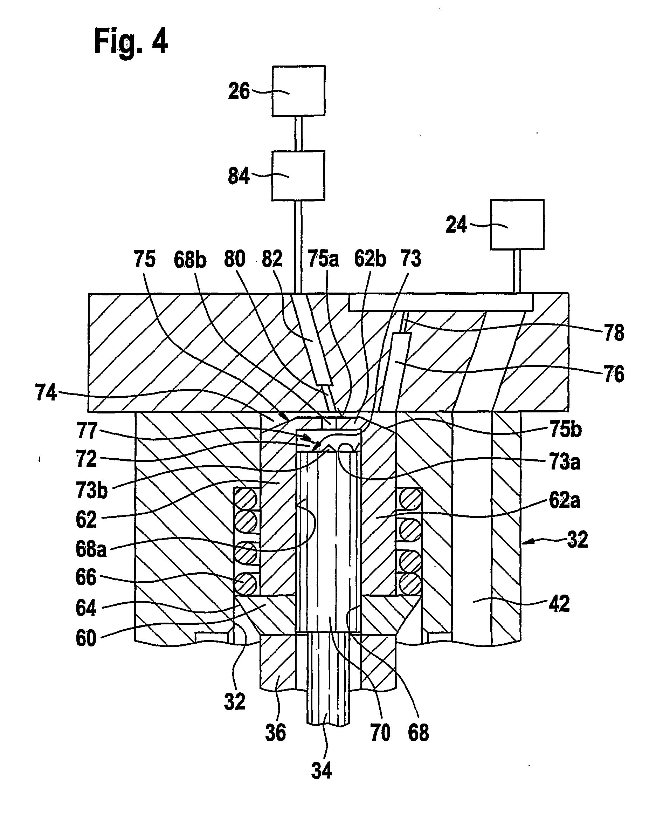

In der in Figur 4 gezeigten Ausgangsstellung ist einerseits das Schaltventil 84 und sind anderseits die Ventilelemente 34 und 36 geschlossen. Die Steuerräume 72 und 74 sind daher vom Niederdruckanschluss 26 getrennt und nur mit dem Hochdruckanschluss 24 verbunden. In den beiden Steuerräumen 72 und 74 herrscht daher der maximal mögliche Fluiddruck, der in etwa dem Druck am Hochdruckanschluss 24 beziehungsweise in der Kraftstoff-Sammelleitung 18 entspricht. Der gleiche Druck herrscht auch im Hochdruckkanal 42, im Druckraum 40 und im Ringraum 44, und somit auch an den Druckflächen 38a und 38b des äußeren Ventilelements 36.

Die Größe der Steuerfläche 75 an der Endkappe 62 des äußeren Ventilelements 36, die Kraft der Druckfeder 66, und die Dimensionen der beiden Druckflächen 38a und 38b sind so aufeinander abgestimmt, dass dann, wenn im Steuerraum 74 der maximal mögliche Kraftstoffdruck herrscht, die auf das äußere Ventilelement 36 wirkende Kraftresultierende dieses sicher mit der Dichtkante 46 gegen die konische Gehäusefläche 48 drückt. Auf diese Weise kann weder durch die Austrittskanäle 50 noch durch die Austrittskanäle 58 Kraftstoff austreten. In diesem Ausgangszustand liegt darüber hinaus auch die Dichtkante 56 des inneren Ventilelements 34 an der konischen Gehäusefläche 48 an, und zwar insgesamt vor allem aufgrund der an der Steuerfläche 73 am Endkolben 70 des inneren Ventilelements 34 angreifenden hydraulischen Kraft.

Wenn eine vergleichsweise geringe Kraftstoffmenge von der Kraftstoff-Einspritzvorrichtung 20 in einen Brennraum 22 eingespritzt werden soll, wird das Schaltventil 84 nur sehr kurz geöffnet. Hierdurch sinkt der Druck im Steuerraum 74 ab, und entsprechend sinkt auch die an der Steuerfläche 75 angreifende hydraulische Kraft. Da an den beiden Druckflächen 38a und 38b des äußeren Ventilelements 36 jedoch weiterhin der hohe Fluiddruck anliegt, überwiegen nun die in Öffnungsrichtung wirkenden Kräfte. Die Dichtkante 46 wird daher von der konischen Gehäusefläche 48 abgehoben, und das äußere Ventilelement 36 öffnet. Somit kann Kraftstoff zu den Austrittskanälen 50 strömen und aus diesen austreten.

Die Druckabsenkung im Steuerraum 72, welcher dem inneren Ventilelement 34 zugeordnet ist, ist gegenüber der Druckabsenkung im Steuerraum 74 zeitverzögert, da der Verbindungskanal 68b in der Endkappe 62 des äußeren Ventilelements 36 eine zusätzliche Drosselstelle bildet. Wird das Schaltventil 84 wieder rechtzeitig geschlossen, wird die Druckabsenkung im Steuerraum 72, der dem inneren Ventilelement 34 zugeordnet ist, gestoppt, bevor das innere Ventilelement 34 öffnet.

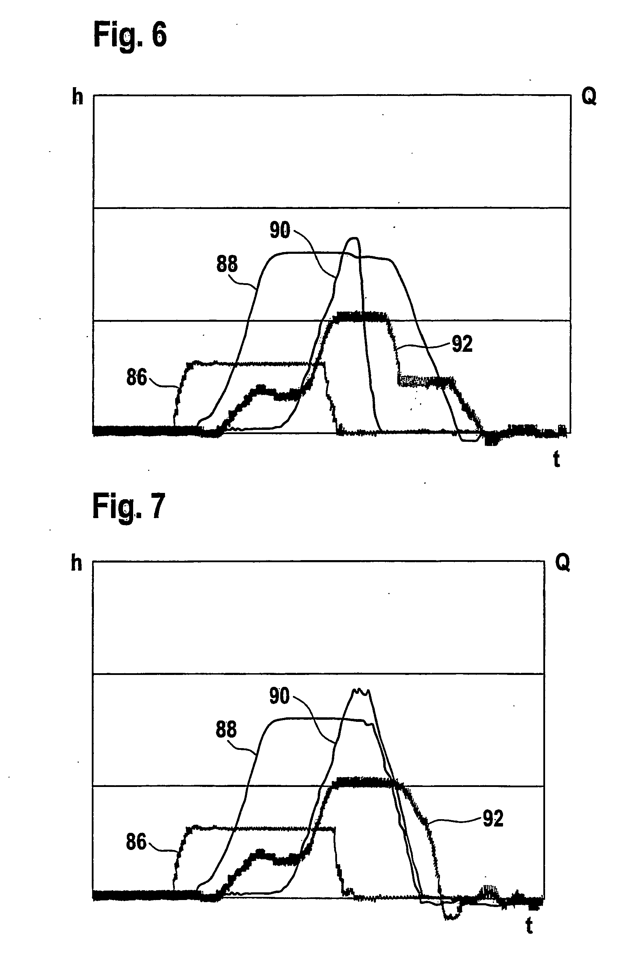

Wenn auch das innere Ventilelement 34 öffnen soll, wird das Schaltventil 84 entsprechend länger geöffnet. Dabei wird zunächst der Fall betrachtet, dass nur eine mittlere Kraftstoffmenge eingespritzt werden soll, wie beispielsweise bei Teillastbetrieb der Brennkraftmaschine. Dieser Fall ist in Figur 6 über der Zeit t aufgetragen. Dabei trägt die Kurve, welche die Schaltstellung des Schaltventils 84 wiedergibt, das Bezugszeichen 86. Die Hubkurve h des äußeren Ventilelements 36 ist mit 88 bezeichnet, jene des inneren Ventilelements mit 90. Die Kurve, welche den Kraftstoffstrom dQ/dt wiedergibt, trägt das Bezugszeichen 92.

Der Öffnungsvorgang des äußeren Ventilelements 36 ist identisch zu dem oben beschriebenen. Allerdings wird das Schaltventil 84 nun so lange offen gelassen, dass auch im Steuerraum 72 der Druck so weit abfallen kann, dass die an der Druckfläche 54a des inneren Ventilelements 34 in Öffnungsrichtung wirkende hydraulische Kraft die an der Steuerfläche 73 in Schließrichtung wirkende Kraft übersteigt. Hierdurch hebt die Dichtkante 56 des inneren Ventilelements 34 von der Gehäusefläche 48 ab, so dass Kraftstoff auch zu den Austrittskanälen 58 gelangt und durch diese aus der Kraftstoff-Einspritzvorrichtung 20 austritt. Der Durchmesser des Verbindungskanals 68b ist dabei so gewählt, dass der Kraftstoff aus dem Steuerraum 72 nur vergleichsweise langsam abströmen kann. Insgesamt öffnet das innere Ventilelement 34 daher entsprechend langsam.

Das Schaltventil 84 wird in dem hier betrachteten Beispiel wieder geschlossen, bevor das innere Ventilelement 34 mit dem Ventilzapfen 73b am Deckel 62b der Endkappe 62 anschlägt und den Verbindungskanal 68b verschließt. Somit erhöht sich zwar zunächst der Druck im Steuerraum 74, der dem äußeren Ventilelement 36 zugeordnet ist. Durch den Verbindungskanal 68b wird die Druckerhöhung jedoch auch in den inneren Steuerraum 72 übertragen. Da dessen Volumen vergleichsweise klein und die Steuerfläche 73 vergleichsweise groß ist, beginnt das innere Ventilelement 34 seine Schließbewegung (Kurve 90) noch vor dem äußeren Ventilelement 36 (Kurve 88). Wird das Schaltventil 84 also geschlossen, bevor das innere Ventilelement 34 in seiner geöffneten Endstellung angelangt ist, schließt dieses vor dem äußeren Ventilelement. Es ergibt sich beim Öffnen und beim Schließen ein stufenförmiges Einspritzverhalten (Kurve 92 in Figur 6).

Wird das Schaltventil 84 also so lange offen gelassen, dass auch beim inneren Ventilelement 34 ein Öffnungsvorgang einsetzt, dann führt dies nicht zu einer plötzlichen sondern nur zu einer allmählichen Erhöhung der von der Kraftstoff-Einspritzvorrichtung 20 abgegebenen Kraftstoffmenge. Ein so genannter "Mengensprung" in diesem Grenzbereich der Ansteuerzeit des Schaltventils 84 wird bei der in den Figuren 2 bis 5 gezeigten Kraftstoff-Einspritzvorrichtung 20 also vermieden.

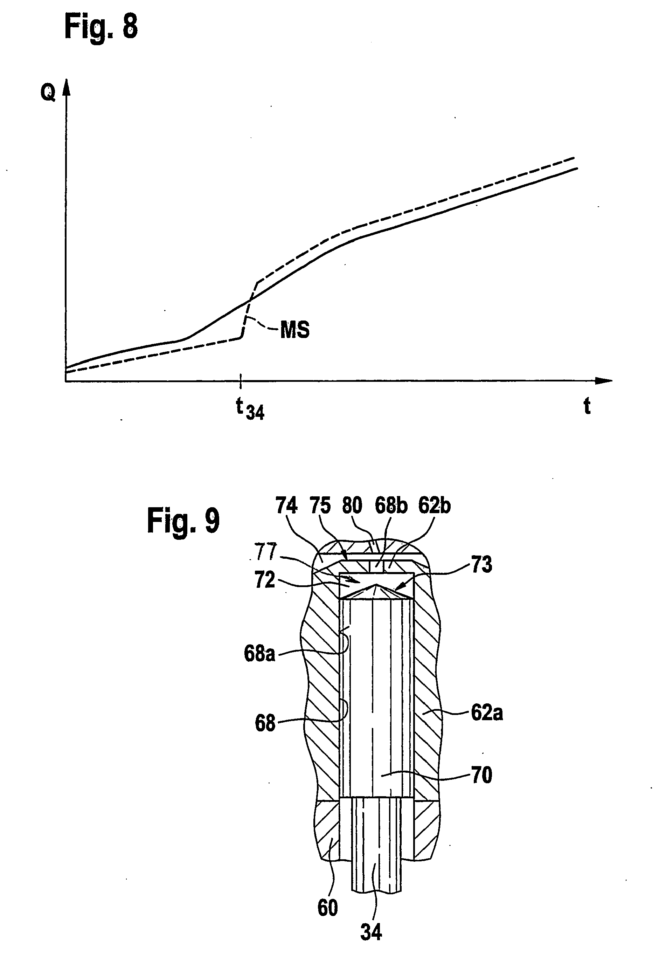

Eine entsprechende Kurve, welche die abgegebene Kraftstoffmenge über der Ansteuerzeit des Schaltventils 84 zeigt, ist in Figur 8 aufgetragen. Jene Ansteuerdauer des Schaltventils 84, bei welcher das innere Ventilelement 34 zu öffnen beginnt, ist mit t₃₄ bezeichnet. Man erkennt, dass auch zum Zeitpunkt t₃₄ bei der Kraftstoff-Einspritzvorrichtung 20 keine sprunghafte Zunahme der abgegebenen Kraftstoffmenge Q beobachtet werden kann. Die entsprechende Kurve bei einer herkömmlichen Kraftstoff-Einspritzvorrichtung 20 ist in Figur 8 gestrichelt aufgetragen. Man erkennt dort deutlich den Mengensprung MS zum Zeitpunkt t₃₄.

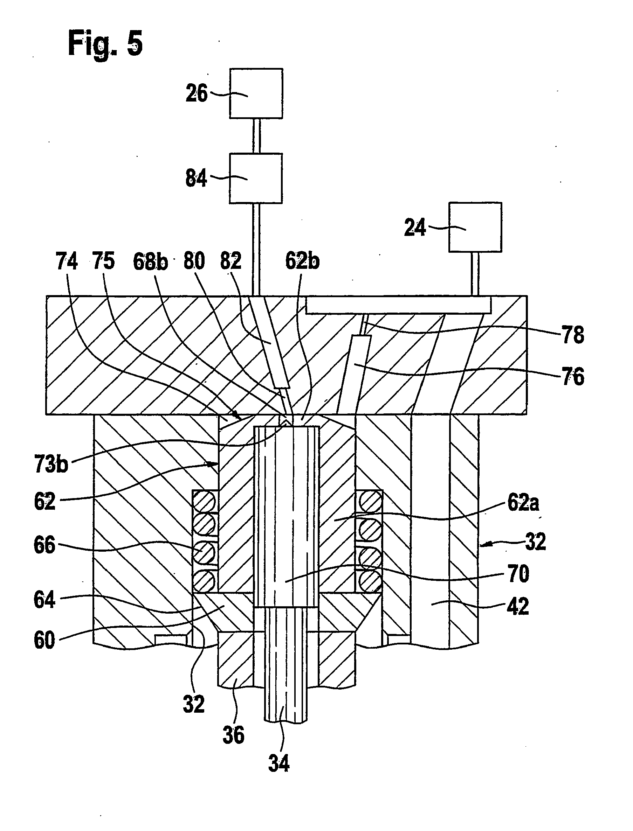

Nun wird ein nochmals anderer Anwendungsfall betrachtet, wie er beispielsweise bei Volllast der Brennkraftmaschine vorkommt. Dieser Fall ist in Figur 7 aufgetragen. Das Öffnen der beiden Ventilelement 34 und 36 erfolgt wie oben beschrieben. Das Schaltventil 84 bleibt jedoch so lange geöffnet, dass das innere Ventilelement 34 bis in seine geöffnete Endstellung gelangen kann, in der die Ventileinrichtung 77 mit dem Ventilzapfen 73b den Verbindungskanal 68b verschließt (vergleiche Figur 5). Auf diese Weise ist der Steuerraum 72 vom Steuerraum 74 getrennt. Der Druck im Steuerraum 72 sinkt nun aufgrund der Leckage zwischen dem Endkolben 70 und der Endkappe 62 weiterhin und im Extremfall bis auf das Niveau am Niederdruckanschluss 26 ab.

Soll die Einspritzung von Kraftstoff beendet werden, wird das Schaltventil 84 geschlossen. Hierdurch erhöht sich der Druck im Steuerraum 74 und im Verbindungskanal 68b. Die Wirkfläche des Zapfenabschnitts 73b ist jedoch im Gegensatz zu den in Öffnungsrichtung wirkenden Druckflächen 54a und 54b des inneren Ventilelements 34 so klein, dass sichergestellt ist, dass das innere Ventilelement 34 zunächst nicht selbsttätig schließt. Stattdessen wird das innere Ventilelement 34 durch den am Deckel 62b anliegenden Zapfenabschnitt 73b während der Schließbewegung des äußeren Ventilelements 36 mitgenommen. Inneres und äußeres Ventilelement 34 und 36 schließen daher gleichzeitig.

Sobald das äußere Ventilelement 36 mit seiner Dichtkante 46 in die unmittelbare Nähe der Gehäusefläche 48 gelangt, wird der Kraftstofffluss zu den Austrittskanälen 50 und auch zu den Austrittskanälen 58 gedrosselt. Hierdurch sinkt auch der Druck, der an den Druckflächen 54a und 54b des inneren Ventilelements 34 anliegt, und die in Öffnungsrichtung auf das innere Ventilelement 34 wirkende hydraulische Kraft wird kleiner. Schließlich überwiegt die am Zapfenabschnitt 73b in Schließrichtung wirkende Kraft und reicht aus, um den Endkolben 70 des inneren Ventilelements 34 vom Deckel 62b wegzubewegen.

Nun liegt mehr oder weniger schlagartig an der gesamten Steuerfläche 73 des Endkolbens 70 ein entsprechend hoher Fluiddruck an, so dass das innere Ventilelement 34 sehr schnell noch die restliche Strecke bis in seine vollständig geschlossene Position bewegt wird. Dabei ist nur noch ein sehr geringer Weg zurückzulegen, da das innere Ventilelement 34 vom äußeren Ventilelement 36 ja bereits zu einem erheblichen Schließhub gezwungen wurde. Das innere Ventilelement 34 schließt also in etwa zur gleichen Zeit wie das äußere Ventilelement 36. Der Kraftstoff kann von der in den Figuren 2 bis 5 gezeigten Kraftstoff-Einspritzvorrichtung 20 daher mit sehr großer Präzision in den Brennraum 22 eingebracht werden.

In Figur 9 ist ein Bereich einer alternativen Ausführungsform einer Kraftstoff-Einspritzvorrichtung 20 gezeigt. Dabei tragen solche Elemente und Bereiche, die äquivalente Funktionen zu Elementen und Bereichen des oben beschriebenen Ausführungsbeispieles aufweisen, die gleichen Bezugszeichen. Sie sind nicht nochmals im Detail erläutert. Der Unterschied betrifft die Ausgestaltung der Steuerfläche 73 am Endkolben 70. Diese weist keinen Zapfenabschnitt auf, sondern ist insgesamt konisch ausgestaltet. Dies vereinfacht die Herstellung.

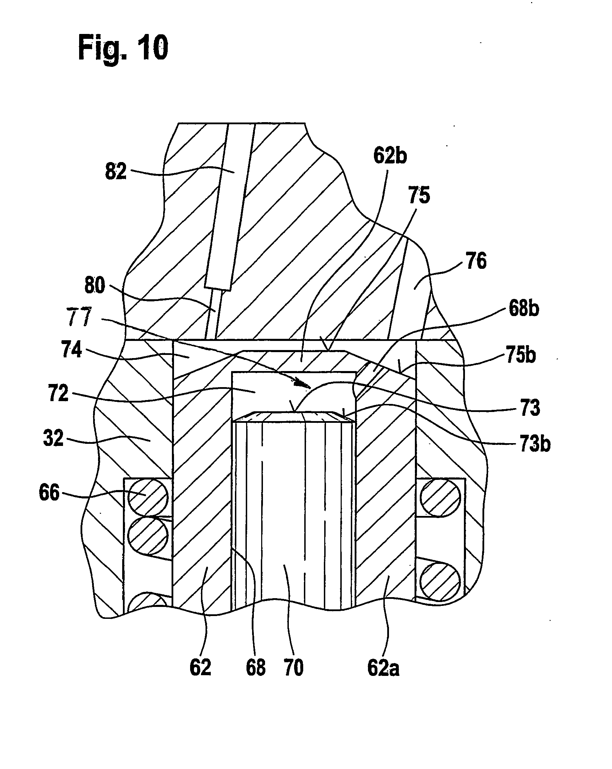

Eine nochmals andere Ausführungsform zeigt Figur 10. Auch hier gilt, dass solche Elemente und Bereiche, welche äquivalente Funktionen zu Elementen und Bereichen der oben beschriebenen Ausführungsbeispiele aufweisen, die gleichen Bezugszeichen tragen und nicht nochmals im Detail erläutert sind.

Im Gegensatz zu den oben beschriebenen Ausführungsbeispielen ist die Steuerfläche 73 des Endkolbens 70 des inneren Ventilelements 34 gerade ausgeführt mit einer randseitigen Fase 73b. Ferner ist die Bohrung 68 als Sackbohrung ausgebildet. Von ihrem dem Deckel 62b unmittelbar benachbarten Randabschnitt erstreckt sich schräg nach außen und oben ein Fluidkanal 68b bis zu dem angeschrägten Randabschnitt 75b der Steuerfläche 75 an der Endkappe 62. Der Abströmkanal 82 mit der Abströmdrossel 80 mündet ferner nicht zentrisch in den Steuerraum 74, sondern in einen dem angeschrägten Randabschnitt 75b gegenüberliegenden Bereich. Bei dem in Figur 8 gezeigten Ausführungsbeispiel bildet der Fluidkanal 68b zusammen mit der radial äußeren Kante der Fase 73b ein Schieberventil 77, durch welches der Steuerraum 72 vom Steuerraum 74 getrennt beziehungsweise mit diesem verbunden werden kann.

## Patentansprüche

1. Kraftstoff-Einspritzvorrichtung (20) für eine Brennkraftmaschine, mit einem Gehäuse (30) und einem ersten Ventilelement (34), welches eine erste in Schließrichtung wirkende hydraulische Steuerfläche (73) aufweist, und mindestens einem zweiten Ventilelement (36), welches eine zweite in Schließrichtung wirkende hydraulische Steuerfläche (75) aufweist, wobei jedem Ventilelement (34, 36) ein eigener hydraulischer Steuerraum (72, 74) zugeordnet ist, der mit einem gemeinsamen Hochdruckanschluss (24) verbindbar und wenigstens bereichsweise von einer jeweiligen hydraulischen Steuerfläche (73, 75) begrenzt wird, und wobei zwischen den Steuerräumen (72, 74) wenigstens zeitweise eine Fluidverbindung (68b) vorhanden ist, durch die eine serielle Verbindung vom Hochdruckanschluss (24) über den einen Steuerraum (74) zum anderen Steuerraum (72) gebildet wird, dass mindestens zwei Ventilelemente (34, 36) koaxial angeordnet sind, wobei der dem inneren Ventilelement (34) zugeordnete Steuerraum (72) und die Fluidverbindung (68b) in einem Endabschnitt (62) des äußeren Ventilelements (36) ausgebildet sind, **dadurch gekennzeichnet, dass** sie eine Ventileinrichtung (77) umfasst, welche in einer geöffneten Endstellung des inneren Ventilelements (34) die Mündung der Fluidverbindung (68b) in den inneren Steuerraum (72) wenigstens in etwa verschließt.

2. Kraftstoff-Einspritzvorrichtung (20) nach Anspruch 1, **dadurch gekennzeichnet, dass** die Ventileinrichtung (77) einen zapfenartigen, vorzugsweise konischen Ventilkörper (73b) am inneren Ventilelement (34) umfasst.

3. Kraftstoff-Einspritzvorrichtung (20) nach Anspruch 2, **dadurch gekennzeichnet, dass** die hydraulische Steuerfläche (73) des inneren Ventilelements (34) insgesamt konisch ist und so den Ventilkörper der Ventileinrichtung (77) bildet.

4. Kraftstoff-Einspritzvorrichtung (20) nach einem der Ansprüche 2 oder 3, **dadurch gekennzeichnet, dass** der Endabschnitt des äußeren Ventilelements (36) ein separates zylindrisches Teil (62) umfasst, in dem eine zentrische, stufenförmige Durchgangsbohrung (68) vorhanden ist.

5. Kraftstoff-Einspritzvorrichtung (20) nach Anspruch 1, **dadurch gekennzeichnet, dass** die Fluidverbindung (68b) in etwa radial verläuft und die Ventileinrichtung (77) eine Ventilkante (73b) an einem Ventilelement (34) im Sinne eines Schieberventils umfasst, welche in einer geöffneten Endstellung dieses Ventilelements (34) die Mündung der Fluidverbindung (68b) wenigstens in etwa verdeckt.

6. Kraftstoff-Einspritzvorrichtung (20) nach einem der vorhergehenden Ansprüche, **dadurch gekennzeichnet, dass** die Fluidverbindung (68b) eine Strömungsdrossel umfasst.

7. Kraftstoff-Einspritzvorrichtung (20) nach einem der vorhergehenden Ansprüche, **dadurch gekennzeichnet, dass** ein Ventilelement (36) einen Mitnehmerabschnitt (62b) aufweist, welcher am anderen Ventilelement (34) mindestens zu Beginn des Schließvorganges anliegt.

8. Kraftstoff-Einspitzvorrichtung (20) nach einem der vorhergehenden Ansprüche, **dadurch gekennzeichnet, dass** die Steuerflächen (73, 75) so dimensioniert sind, dass dann, wenn der Druck in dem dem äußeren Ventilelement (36) zugeordneten Steuerraum (74) wieder erhöht wird, bevor das innere Ventilelement (34) in seiner geöffneten Endstellung angelangt ist, in der es die Fluidverbindung (68b) verschließt, das innere Ventilelement (34) vor dem äußeren Ventilelement (36) schließt, und dass die bei geschlossener Ventileinrichtung (77) und maximalem Druck in dem dem äußeren Ventilelement (36) zugeordneten Steuerraum (74) auf die wirksame Steuerfläche (73b) des inneren Ventilelements (34) wirkende hydraulische Kraft ausreicht, um das innere Ventilelement (34) in Schließrichtung zu bewegen, sobald das äußere Ventilelement (36) in seine Schließstellung kommt.

## Claims

1. Fuel injection device (20) for an internal combustion engine, having a housing (30), having a first valve element (34) which has a first hydraulic control face (73) which acts in a closing direction, and having at least one second valve element (36) which has a second hydraulic control face (75) which acts in a closing direction, with each valve element (34, 36) being assigned a separate hydraulic control space (72, 74) which can be connected to a common high pressure port (24) and is delimited at least in regions by a respective hydraulic control face (73, 75), with a fluid connection (68b) being provided at least at times between the control spaces (72, 74), by means of which fluid connection (68b) a serial connection is formed from the high pressure port (24) via one control space (74) to the other control space (72), with at least two valve elements (34, 36) being arranged coaxially, with the fluid connection (68b) and the control space (72) which is assigned to the inner valve element (34) being formed in an end section (62) of the outer valve element (36), **characterized in that** said fuel injection device (20) comprises a valve device (77) which, when the inner valve element (34) is in an open end position, at least approximately closes off the orifice of the fluid connection (68b) into the inner control space (72).

2. Fuel injection device (20) according to Claim 1, **characterized in that** the valve device (77) comprises a pin-like, preferably conical valve body (73b) on the inner valve element (34).

3. Fuel injection device (20) according to Claim 2, **characterized in that** the hydraulic control face (73) of the inner valve element (34) is conical overall and thus forms the valve body of the valve device (77).

4. Fuel injection device (20) according to one of Claims 2 or 3, **characterized in that** the end section of the outer valve element (36) comprises a separate cylindrical part (62) in which is provided a central, stepped through bore (68).

5. Fuel injection device (20) according to Claim 1, **characterized in that** the fluid connection (68b) runs approximately radially and the valve device (77) comprises a valve edge (73b) on a valve element (34) in the manner of a sliding valve, which valve edge (73b) at least approximately covers the orifice of the fluid connection (68b) when said valve element (34) is in an open end position.

6. Fuel injection device (20) according to one of the preceding claims, **characterized in that** the fluid connection (68b) comprises a flow throttle.

7. Fuel injection device (20) according to one of the preceding claims, **characterized in that** one valve element (36) has a driver section (62b) which bears against the other valve element (34) at least at the beginning of the closing process.

8. Fuel injection device (20) according to one of the preceding claims, **characterized in that** the control faces (73, 75) are dimensioned such that when the pressure in the control space (74) assigned to the outer valve element (36) is increased again before the inner valve element (34) has reached its open end position in which it closes off the fluid connection (68b), the inner valve element (34) closes before the outer valve element (36), and **in that** the hydraulic force which acts on the effective control face (73b) of the inner valve element (34) when the valve device (77) is closed and there is a maximum pressure in the control space (74) assigned to the outer valve element (36) is sufficient to move the inner valve element (34) in the closing direction once the outer valve element (36) arrives in its closed position.

## Revendications

1. Dispositif d'injection de carburant (20) pour un moteur à combustion interne, comportant un boîtier (30) et un premier élément d'injecteur (34) qui présente une première surface de commande (73) hydraulique agissant dans le sens de fermeture, et au moins un second élément d'injecteur (36) qui présente une seconde surface de commande (75) hydraulique agissant dans le sens de fermeture, et dont chaque élément d'injecteur (34, 36) a une chambre de commande hydraulique propre (72, 74) associée qui peut être reliée à un raccord à haute pression commun (24) et délimitée au moins en partie par au moins une des surfaces de commande (73, 75) hydrauliques avec, entre les chambres de commande (72, 74), la présence au moins par instants d'une liaison de fluide (68b) constituant une liaison sérielle partant du raccord à haute pression (24) et aboutissant à la chambre de commande (72) à travers l'autre chambre de commande (74), les deux éléments d'injecteur (34, 36) étant coaxiaux, et la chambre de commande (72) associée à l'élément interne d'injecteur (34) ainsi que la liaison du fluide (68b) étant réalisées dans un segment d'extrémité (62) de l'élément externe d'injecteur (36),
**caractérisé en ce qu'**
dans la position de fin de course ouverte de l'élément interne d'injecteur (34), un dispositif de soupape (77), ferme au moins à peu près l'embouchure de la liaison de fluide (68b) dans la chambre de commande interne (72).

2. Dispositif d'injection de carburant (20) selon la revendication 1,
**caractérisé en ce que**
le dispositif de soupape (77) comprend un corps de soupape (73b) du genre tourillon, de préférence conique, disposé sur l'élément interne d'injecteur (34).

3. Dispositif d'injection de carburant (20) selon la revendication 2,
**caractérisé en ce que**
la surface de commande (73) hydraulique de l'élément interne d'injecteur (34) est globalement conique et constitue ainsi le corps de soupape du dispositif de soupape (77).

4. Dispositif d'injection de carburant (20) selon la revendication 2 ou 3,
**caractérisé en ce que**
le segment d'extrémité de l'élément externe d'injecteur (36) comprend une partie cylindrique séparée (62) dans laquelle se trouve un alésage de passage (68) centré et étagé.

5. Dispositif d'injection de carburant (20) selon la revendication 1,
**caractérisé en ce que**
la liaison de fluide (68b) est sensiblement radiale, et le dispositif de soupape (77) présente une arête de soupape (73b) sur un élément d'injecteur (34) comme pour un tiroir, et cette arête, quand l'élément d'injecteur (34) est en position ouverte de fin de course, recouvre au moins à peu près l'embouchure de la liaison de fluide (68b).

6. Dispositif d'injection de carburant (20) selon une des revendications précédentes,
**caractérisé en ce que**
la liaison de fluide (68b) comprend un étranglement de l'écoulement.

7. Dispositif d'injection de carburant (20) selon une des revendications précédentes,
**caractérisé en ce qu'**
un élément d'injecteur (36) présente un segment d'entraînement (62b) appliqué sur l'autre élément d'injecteur (34) au moins au début de l'opération de fermeture.

8. Dispositif d'injection de carburant (20) selon une des revendications précédentes,
**caractérisé en ce que**
les surfaces de commande (73, 75) sont dimensionnées pour que quand la pression dans la chambre de commande (74) associée à l'élément externe d'injecteur (36) augmente à nouveau avant que l'élément interne d'injecteur (34) soit parvenu à sa position de fin de course ouverte, où il ferme la liaison de fluide (68b), l'élément interne (34) ferme avant l'élément externe (36), et la force hydraulique agissant sur la surface de commande efficace (73b) de l'élément interne (34) quand le dispositif de soupape (77) est fermé et que règne la pression maximale dans la chambre de commande (74) associée à l'élément externe (36), est suffisante pour déplacer l'élément interne (34) dans le sens de fermeture dès que l'élément externe (36) atteint sa position de fermeture.
